# EUROPÄISCHE PATENTSCHRIFT

(11) **EP 3 187 790 B1**
(45) Veröffentlichungstag und Bekanntmachung des Hinweises auf die Patenterteilung: **29.06.2022**
(21) Anmeldenummer: 16207210.2
(22) Anmeldetag: 28.12.2016
(51) Int. Cl.: F24F 11/30, F24F 5/00, F24F 6/12, F24F 6/02, F24F 6/14, F24F 11/00, F24F 110/20, F24F 12/00

(54) **REGELUNGSVERFAHREN UND RAUMLUFTTECHNISCHE ANLAGE MIT HYBRIDBEFEUCHTER UND VERWENDUNG EINES NICHT-IONISCHEN TENSIDS ALS MEDIUM EINER REGELUNG IN DER RAUMLUFTTECHNIK**
CONTROL METHOD AND VENTILATION ASSEMBLY WITH HYBRID HUMIDIFIER AND USE OF A NON-IONIC SURFACTANT AS MEDIUM OF A CONTROL IN AIR-CONDITIONING TECHNOLOGY
PROCÉDÉ DE RÉGULATION ET INSTALLATION DE CLIMATISATION COMPRENANT UN HUMIDIFICATEUR HYBRIDE ET UTILISATION D'UN AGENT TENSIOACTIF NON IONIQUE EN TANT QUE MILIEU DE RÉGULATION DANS LA TECHNIQUE DE CLIMATISATION

(30) Priorität: 31.12.2015 DE 102015016879
(43) Veröffentlichungstag der Anmeldung: 05.07.2017
(73) Patentinhaber: Howatherm Klimatechnik GmbH, 55767 Brücken (DE)
(72) Erfinder: Dr.-Ing. Kaup, Christoph, 55767 Brücken (DE)
(74) Vertreter: Westphal, Mussgnug & Partner Patentanwälte mbB

(56) Entgegenhaltungen:
- EP-A2- 2 369 252
- WO-A1-2010/015258
- DE-C1- 10 203 229

## Beschreibung

Die Erfindung betrifft eine raumlufttechnische Anlage, ein Regelungsverfahren für eine raumlufttechnische Anlage mit einem Hybridbefeuchter sowie eine Verwendung eines Tensids als ein Medium einer Regelung in der Raumlufttechnik.

Bekannte Trennflächen-Wärmeübertrager übertragen bevorzugt sensible Wärme. Diese Wärmeübertrager können beispielsweise als Plattenwärmeübertrager oder gekoppelte Wärmeübertrager (Kreislaufverbundsysteme) ausgestaltet sein.

Weiterhin ist es bekannt, dass in einer raumlufttechnischen Anlage mehrere Trennflächen-Wärmeübertrager zur Leistungssteigerung im Gegenstrom hintereinander geschaltet werden können.

Eine Leistungsregelung kann bei Trennflächen-Wärmeübertragern durch das Verändern des Massenstromverhältnisses (Bypass oder Regelventile) erfolgen.

Bekannt ist auch die Nutzung der indirekten Verdunstungskühlung. Hierbei wird Wasser auf der Abluftseite durch Befeuchtereinrichtungen adiabat (bei gleicher Enthalpie) verdunstet, um die dadurch entstehende Temperatursenke zur Abwärmeaufnahme der Zuluftseite durch das folgende WRG-System zu nutzen. Hierdurch wird die Außenluft gekühlt und die Abwärme der Fortluft zugeführt wodurch sie sich im Gegenzug erwärmt.

In alternativen Ausführungsformen kann der separate Befeuchter auch entfallen oder durch andere Befeuchtungs- und Sprüheinrichtungen ersetzt werden, die dem Wärmeübertrager zugeordnet sind. Zur Erzeugung eines Sprühnebels kann eine Pumpe oder vorhandener Leitungsdruck zum Einsatz kommen. Es kann, beispielsweise mittels der Sprüheinrichtung Wasser in Form feiner Wasserpartikel in den Luftstrom eingesprüht werden, wobei die Abluft (vor dem Wärmeübertrager) nicht das gesamte Wasser aufnehmen kann, da der Sättigungspunkt der Abluft erreicht wird oder die Befeuchtungsstrecke vor dem Wärmeübertrager nicht ausreicht um den Sättigungspunkt zu erreichen. Verbleibende feine Wasserpartikel werden vom Abluftstrom mitbefördert und setzen sich zumindest teilweise auf Wärmeübertragungselementen der Wärmeübertragers ab. Die Abluft erwärmt sich bei Kontakt mit den Wärmeübertragerelementen und kühlt das Fluid in den Wärmeübertragerelementen ab. Die erwärmte Abluft kann nun zusätzliches Wasser in Form einer Nachverdunstung aufnehmen. Somit verdunstet zusätzlich Wasser in Form der feinen Wasserpartikel im Bereich der Wärmeübertragerelemente und die Abluft bzw. das Fluid kühlt weiter ab. Folglich wird das Fluid oder die Abluft in den Wärmeübertragerelementen stärker abgekühlt und kann mehr Wärme von dem Zuluftkanal auf den Abluftkanal übertragen. Alternativ oder zusätzlich kann auch von einer zweiten oder mehreren Befeuchtungssprüheinrichtung Wasser direkt auf die weiteren, folgenden Wärmeübertragerelemente aufgetragen werden.

Solche Anlagen lassen sich beispielsweise nach gewünschten und gegebenen Luftfeuchten und -temperaturen regeln. Die Menge an aufgesprühter Flüssigkeit ist dabei eine bekannte Regelgröße. Aus WO 2010/015258 A1 ist eine raumlufttechnische Anlage mit einem Wärmeübertrager und ein Regelungsverfahren einer Wärmerückgewinnungseinrichtung bekannt. Weiter dort eine Dosiereinrichtung für ein Netzmittel zur Reinigung des Wärmeübertragers vorgesehen.

Aus DE 102 03 229 C1 ist ein Wärmetauscher bekannt, bei dem ein Tensid zur Hydrophilierung benutzt wird.

Aus der EP 2 369 252 A2 ist ein Verfahren zum Kühlen eines Raums bekannt, indem durch Verdunstung von Feuchtigkeit Kälte im Fortluftstrom erzeugt wird. Dabei wird abhängig von der Temperatur und der Feuchte der Zuluft und der Abluft wahlweise Zu- oder Abluft zur adiabaten Kühlung im Wärmetauscher verwendet.

Raumlufttechnische Anlagen werden hinsichtlich ihrer Kühlleistungen immer kritischer bewertet. Es wird versucht zusätzliche Kältemaschinen zu vermeiden und doch ausreichend sicher zu kühlen. Es besteht daher weiterhin das Erfordernis, dass neue Regelkonzepte deutliche Verbesserungen bewirken. Bereits vorhandene und / oder neue Trennflächen-Wärmeübertrager sollen möglichst in neuen oder bestehenden raumlufttechnischen Anlagen verwendet werden, um Wirkungsgradverbesserungen gesamter raumlufttechnischer Anlagen und / oder die wirtschaftliche Nutzung der verwendeten Wärmeübertrager zu erreichen.

Die Erfindung löst dieses Problem mit einem Regelverfahren nach Anspruch 1 und einer raumlufttechnischen Anlage nach Anspruch 5. Die Verwendung eines Tensids als Regelparameter oder Regelmedium nach Anspruch 7 löst erfindungsgemäß das Problem ganz grundsätzlich.

Vorteilhafte Ausführungsformen sind Gegenstand von Unteransprüchen.

Handelt es sich beispielsweise bei der Klimatisierungsaufgabe um eine zentrale Kühlung eines Raumes kommt als Erfolg der Erfindung in Betracht zusätzlich zum Potenzial der Außenluft in einem solchen Fall vorteilhaft eine mehrstufige indirekte Verdunstungskühlung auf Basis eines als Hybridbefeuchter ausgebildeten Wärmeübertragers zu nutzen.

Durch dessen Kühlleistung, die auf einem Befeuchtungsgrad von bis zu 100 % und auf einem Wärmeübertrager mit einem hohen Wirkungsgrad basiert, kann bei Einsatz eines erfindungsgemäßen Verfahrens auf eine mechanische Kälteerzeugung verzichtet werden, da durch das erfindungsgemäße Verfahren der Befeuchtungswirkungsgrad durch die Zumischung eines chemischen Additivs auf bis zu 160 % gesteigert werden kann. Dieser Effekt beruht auf einer gesteigerten Nachverdunstung im Wärmeübertrager durch die deutlich verbesserte Benetzung der wärmeübertragenden Oberflächen, da sich die Tropfen im Wärmeübertrager zu einem gleichmäßigen Wasserfilm mit wesentlich größerer Oberfläche ausbilden.

Es kann beispielsweise bei einer Abluftkondition 26°C bei 50% und einer Außenlufttemperatur 32°C eine Zulufttemperatur von 18°C eingehalten werden.

Die bisher zur ausreichenden Absicherung der geforderten Zulufttemperaturen erforderliche mechanische Kühlleistung kann vollständig entfallen.

Durch die Nutzung von Wasser mit einer geringen Konzentration eines Additivs als Verdunstungsmedium und den Verzicht der mechanischen Kälteerzeugung können damit F-Gase eliminiert werden.

Der Wärmeübertrager kann dabei je nach benötigter Kühlleistung durch das Schalten von Befeuchterstufen, der Regelung der Sprühdauer und durch das Beimischen eines Additiv gleitend geregelt werden.

Beispielsweise bei bisherigen Hybridbefeuchtern für Übertrageroberflächen verwendete fest aufgebrachte hydrophile Beschichtungen werden nach der Erfindung vorteilhaft durch ein regelbares, chemisches Additiv ersetzt, das die hydrophile Eigenschaft je nach Bedarf erzeugt. Bei Wärmeübertragern ohne hydrophile Beschichtung wird die Leistung erheblich durch das chemische Additiv gesteigert, da die vollflächige Benetzung der Wärmeübertrageroberflächen so gewährleistet wird.

Die Verwendung vorteilhafter Netzmittel bewirkt weiterhin, dass Korrosion des Wärmeübertragers verringert wird. Es haftet weniger Kalk an den Flächen an, was auch die Nachhaltigkeit von Investitionen in solche raumlufttechnische Anlagen verbessert. Das vorteilhafte Netzmittel ist dabei nach vorteilhaften Ausführungsformen biologisch abbaubar und schäumt nicht.

Insbesondere auch die Idee einer grundsätzlichen Verwendung eines nicht-ionischen Tensids als Medium einer Regelung in der Raumlufttechnik wird anhand eines in einer Figur skizzierten Ausführungsbeispiels näher erläutert.

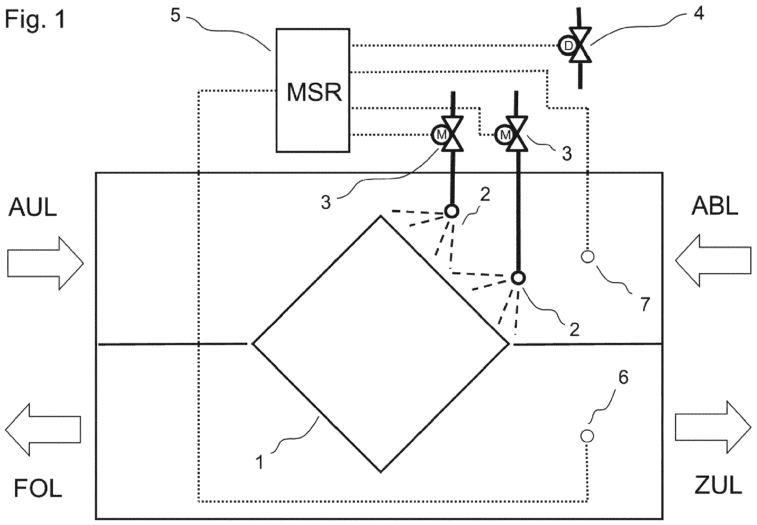

Figur 1 zeigt einen in einer nach einem Ausführungsbeispiel erfindungsgemäßen raumlufttechnischen Anlage geschalteten Wärmeübertrager 1, beispielsweise einen Plattenwärmeübertrager, vor dem Sprühdüsen 2 derart in einem Luftstrom ABL angeordnet sind, dass in den Wärmeübertrager eingeleitete Abluft einen Sprühnebel mitnehmen kann, zumindest bis in den Wärmeübertrager 1 hinein. Dort legt sich der Sprühnebel zumindest teilweise auf Oberflächen, sodass es auf dessen Oberfläche zu intensiver Verdunstung kommt. Mithin wird in diesem Ausführungsbeispiel die Zuluft gekühlt.

Der Figur 1 ist ferner zu entnehmen, dass Magnetventile 3 entsprechend einer Reglungseinrichtung 5 gestellt werden können, um die Wassermenge zu erhöhen oder zu reduzieren. Unabhängig davon ist eine Dosiereinrichtung 4 mit den Wasserleitungen oder der Wasserleitung zu den Sprühdüsen 2 verbunden, um die Aufgabe des Tensids regeln zu können.

Die Regelungseinrichtung ist in dem Ausführungsbeispiel nach Figur 1 weiterhin verbunden mit einem Zulufttemperaturfühler 6 und einem Ablufttemperatur und -feuchtefühler 7.

### Bezugszeichenliste:

- 1: Wärmeübertrager (z. B. Plattenwärmeübertrager)
- 2: Sprühdüse
- 3: Magnetventil
- 4: Dosiereinrichtung zur Aufgabe des Tensids
- 5: MSR = Mess-, Steuer- und Regeleinrichtung
- 6: Zulufttemperaturfühler
- 7: Ablufttemperatur und -feuchtefühler

## Patentansprüche

1. Regelungsverfahren zum Klimatisierungsbetrieb einer Wärmerückgewinnungseinrichtung, welche Außenluft zumindest einem als Hybridbefeuchter ausgebildetem Wärmeübertrager (1) zuführt und dem entgegen Abluft zumindest eine Sprüheinrichtung (2) passierend fördert, bis sie als Fortluft das System verlässt,
**dadurch gekennzeichnet, dass** die Sprüheinrichtung (2) ein Befeuchterwasser aufweisend ein Netzmittel direkt auf Wärmeübertragerflächen und/oder zumindest im Lufteintrittsbereich für Abluft des Wärmeübertragers (1) sprüht und dass die Netzmittelkonzentration in dem Befeuchterwasser als Regelgröße verwendet wird.

2. Regelungsverfahren nach Anspruch 1,
**dadurch gekennzeichnet, dass** als Netzmittel zumindest ein nichtionisches und nicht schäumendes Tensid verwendet wird, das darüber hinaus biologisch abbaubar und korrosionshemmend ist.

3. Regelungsverfahren nach einem der Ansprüche 1 oder 2,
**dadurch gekennzeichnet, dass** die Netzmittelkonzentration in einem Bereich zwischen 0 % bis 1 % geregelt wird.

4. Regelungsverfahren nach einem der vorangehenden Ansprüche,
d**adurchg ekennzeichnet**, dass die Regelgröße Netzmittelkonzentration und eine weitere Steuer- oder Regelgröße Sprüh- und Pausenzeit und / oder eine weitere Steuer- oder Regelgröße Fahrweise ein- oder mehrstufig abgestimmt werden.

5. Raumlufttechnische Anlage mit einem als Hybridbefeuchter ausgebildetem Wärmeübertrager,
**dadurch gekennzeichnet, dass** einem Befeuchterwasser des Hybridbefeuchters zur geregelten Klimatisierung ein Netzmittel zudosiert ist, nämlich mittels einer Regelungseinrichtung.

6. Raumlufttechnische Anlage nach Anspruch 5 zur Durchführung eines Regelungsverfahrens nach einem der Ansprüche 1 bis 4.

7. Verwendung eines nicht-ionischen Tensids als Medium einer Regelung einer Klimatisierung in der Raumlufttechnik, wobei eine gezielte Dosierung des nicht-ionischen Tensids in einem Befeuchterwasser zur Regelung eines Befeuchtungswirkungsgrades verwendet wird.

## Claims

1. A control method for air conditioning operation of a heat recovery facility that supplies outdoor air to at least one heat exchanger (1) in the form of a hybrid humidifier and that conveys exhaust air in the opposite direction, passing at least one spraying unit (2), until it leaves the system as outgoing air,
**characterised in that** the spraying unit (2) sprays a humidifier water comprising a wetting agent directly onto heat exchanger surfaces and/or at least in the air entrance area for exhaust air of the heat exchanger (1) and that the wetting agent concentration in the humidifier water is used as control variable.

2. The control method in accordance with claim 1,
**characterised in that** at least one non-ionic and non-foaming surfactant that is also biodegradable and corrosion-inhibiting is used as wetting agent.

3. The control method in accordance with one of claims 1 or 2,
**characterised in that** the wetting agent concentration is controlled in an area between 0% and 1%.

4. The control method in accordance with one of the preceding claims,
**characterised in that** the control variable wetting agent concentration and another adjustment or control variable spray and break time and/or another adjustment or control variable operating mode are adjusted in one or multiple steps.

5. An air conditioning and ventilation system with a heat exchanger in the form of a hybrid humidifier,
**characterised in that** a wetting agent is dosed into a humidifier water of the hybrid humidifier, i.e., by a control device.

6. The air conditioning and ventilation system in accordance with claim 5 for performing a control method in accordance with one of claims 1 to 4.

7. Use of a non-ionic surfactant as a medium in a control of air conditioning in an air conditioning and ventilation system, wherein targeted dosage of the non-ionic surfactant in a humidifier water is used to control a humidifying efficiency.

## Revendications

1. Procédé de régulation du fonctionnement de la climatisation d'un dispositif de récupération de chaleur, qui alimente en air extérieur au moins un échangeur de chaleur (1) conçu comme un humidificateur hybride et qui véhicule au moins un dispositif de pulvérisation (2) dans le sens inverse de l'air évacué, jusqu'à ce qu'il quitte le système comme air vicié,
**caractérisé en ce que**
le dispositif de pulvérisation (2) pulvérise de l'eau d'humidification contenant un agent mouillant directement sur les surfaces de l'échangeur de chaleur et/ou au moins dans la zone d'entrée d'air pour l'air évacué de l'échangeur de chaleur (1), et **en ce que** la concentration d'agent mouillant dans l'eau de l'humidificateur est utilisé comme variable de contrôle.

2. Procédé de régulation selon la revendication 1,
**caractérisé en ce que**
au moins un tensioactif non ionique et non moussant est utilisé comme agent mouillant, qui est également biodégradable et inhibiteur de corrosion.

3. Procédé de régulation selon l'une des revendications 1 ou 2,
**caractérisé en ce que**
la concentration en agent mouillant est régulée dans une plage comprise entre 0 % et 1 %.

4. Procédé de régulation selon une des revendications précédente,
**caractérisé en ce que**
la variable de contrôle de concentration en agent mouillant et une autre variable de commande ou de contrôle du temps de pulvérisation et de pause et/ou une autre variable de commande ou de contrôle du mode de fonctionnement peuvent être coordonnées en une ou plusieurs étapes.

5. Installation de traitement de l'air ambiant avec un échangeur de chaleur conçu comme un humidificateur hybride,
**caractérisé en ce qu'**un agent mouillant est dosé dans une eau d'humidification de l'humidificateur hybride pour climatisation régulée, notamment au moyen d'un dispositif de régulation.

6. Installation de traitement de l'air ambiant selon la revendication 5 pour la mise en œuvre d'un procédé de régulation selon l'une des revendications 1 à 4.

7. Utilisation d'un tensioactif non ionique comme fluide de commande d'un système de climatisation dans la technologie de climatisation, un dosage ciblé du tensioactif non ionique dans une eau d'humidificateur étant utilisé pour réguler une efficacité d'humidification.
